# EUROPÄISCHE PATENTSCHRIFT

(11) **EP 2 887 638 B1**
(45) Veröffentlichungstag und Bekanntmachung des Hinweises auf die Patenterteilung: **07.08.2019**
(21) Anmeldenummer: 14196289.4
(22) Anmeldetag: 04.12.2014
(51) Int. Cl.: H04N 5/225, B60R 11/04

(54) **Kamera für Fahrzeug, insbesondere Nutzfahrzeug**
Camera for a vehicle, in particular a commercial vehicle
Caméra pour véhicule automobile, en particulier pour véhicule utilitaire

(30) Priorität: 18.12.2013 DE 102013021622
(43) Veröffentlichungstag der Anmeldung: 24.06.2015
(73) Patentinhaber: MEKRA LANG GmbH & Co. KG, 91465 Ergersheim (DE)
(72) Erfinder: Lang, Werner, 91465 Ergersheim (DE); Geissendörfer, Peter, 91465 Ergersheim (DE); Stürzenhofecker, Jens, 91459 Markt Erlbach (DE); Deffner, Simon, 91604 Flachslanden (DE)
(74) Vertreter: Kramer Barske Schmidtchen Patentanwälte PartG mbB

(56) Entgegenhaltungen:
- WO-A1-2006/136208
- DE-A1-102004 049 871
- US-A1- 2009 244 361
- US-A1- 2010 097 519

## Beschreibung

Die vorliegende Erfindung betrifft eine Kamera zur Verwendung an einem Fahrzeug, z. B. einem Nutzfahrzeug.

In letzter Zeit ist es zunehmend angedacht, neben herkömmlichen Spiegeln als Einrichtungen zur indirekten Sicht entweder in Ergänzung oder als Ersatz für die Spiegel Kamerasysteme bzw. Bildaufnahmesysteme als Einrichtungen zur indirekten Sicht einzusetzen, bei denen eine Bildaufhahmeeinheit, wie beispielsweise eine Kamera, ein Aufnahmebild kontinuierlich erfasst, diese von der Bildaufnahmeeinheit erfassten (Video-)Daten, beispielsweise mittels einer Berechnungseinheit und gegebenenfalls nach Weiterbearbeitung, an eine im Fahrerhaus befindliche Wiedergabeeinrichtung geliefert werden, welche für den Fahrer dauerhaft und in Echtzeit und jederzeit einsehbar den entsprechend erfassten Sichtbereich und gegebenenfalls ergänzende Information, wie z. B. Kollisionshinweise, Abstände und Ähnliches, für den Bereich rund um das Fahrzeug darstellt.

Kameras weisen üblicherweise ein Gehäuse mit einem darin angeordneten Bildsensor und einem optischen Element, beispielsweise einem Objektiv, auf. Es ist bekannt, den Bildsensor und das optische Element in einer Halterung bzw. einem Verbindungsbauteil anzuordnen, wobei die Halterung bzw. das Verbindungsbauteil dann in einem separaten Gehäuse untergebracht wird, welches wiederum an einem Fahrzeug angebracht wird.

Damit ein Aufnahmebild mit gewünschter Qualität erfasst werden kann, muss das optische Element relativ zum Bildsensor fokussiert, ausgerichtet, fixiert und abgedichtet werden. Dabei beschreibt die Fokussierung des optischen Elements die Einstellung des Abstandes zwischen der letzten optischen Fläche zur Bildebene des Bildsensors, so dass eine gewünschte Bildschärfe erreicht wird. Die Ausrichtung des optischen Elements hingegen beschreibt die Einstellung der optischen Achse des optischen Elements relativ zum Bildsensor. Ist das optische Element bezüglich des Bildsensors fokussiert und ausgerichtet, muss das optische Element in dieser gewünschten Position im Gehäuse fixiert und das Gehäuse, insbesondere im Bereich des optischen Pfads, gegen das Eindringen von Staub, Wasser, Wasserdampf und anderen Fremdkörpern abgedichtet werden. Der Bereich zwischen dem optischen Element und dem Bildsensor beschreibt den optischen Pfad.

Die Halterung bzw. das Verbindungselement ist gewöhnlich aus einem Kunststoff gefertigt und wird dann in das separate Gehäuse eingebaut, welches Wasserdampf und Staub abhalten kann. In anderen bekannten Ausführungen ist die Halterung bzw. das Verbindungselement aus Metall, beispielsweise Aluminium, gefertigt und kann bereits den schädlichen Wasserdampf davor abhalten, in den optischen Pfad zwischen dem optischen Element und dem Bildsensor einzudringen.

Die DE 20 2005 004 675 U1 offenbart eine Kamera für den Außenbereich, die ein Kameramodul aufweist, das eine Kameraelektronik und eine Kameraoptik umfasst. Die Kameraoptik weist ein der Kameraelektronik zugewandtes erstes Ende und ein in Aufnahmerichtung weisendes zweites Ende auf und ist mit dem ersten Ende mit der Kameraelektronik verbunden. Die Kamera weist ferner ein Kameragehäuse mit einem Hohlraum, in dem das Kameramodul angeordnet ist, auf. Das Kameragehäuse weist in Aufnahmerichtung eine Aufnahmeöffnung auf und besteht vorzugsweise aus Kunststoff. Die Kamera weist außerdem ein die Aufnahmeöffnung abschließendes, transparentes Aufnahmefenster auf, das aus Kunststoff besteht.

Aus der US 2010/0097519 A1 sind eine kompakte Kamera und ein Kabelsystem für Fahrzeuganwendungen bekannt.

Die US 6,507,700 B1 offenbart eine wasserfeste Kamera mit einem wasserfesten Kameragehäuse.

Die DE 18 76 355 U offenbart einen Einsteller für photographische Geräte, insbesondere Verschlüsse.

Aus der US 2010/0097519 A1 sind eine kompakte Kamera und ein Kabelsystem für Fahrzeuganwendungen bekannt. Das Kameragehäuse besteht aus zwei Gehäusebauteilen mit einer leitenden Beschichtung im Inneren von jedem Gehäusebauteil.

Die DE 10 2004 049 871 A1 bezieht sich auf ein Verfahren zur Herstellung einer Objektivaufnahme für ein Objektiv einer für Kraftfahrzeuganwendungen einsetzbaren Kamera. Die Objektivaufnahme und eine vordere Gehäusehalbschale der Kamera werden in einem Arbeitsgang als ein Bauteil hergestellt. Die Herstellung der Objektivaufnahme und der vorderen Gehäuseschale erfolgt aus metallischen Werkstoffen oder Glasfaseranteile aufweisenden Kunststoffmaterialien mit wasserdampfdichter Metallfilmbeschichtung.

Die US 2009/0244361 A1 offenbart ein Kameramodul für ein Sichtsystem eines Fahrzeugs.

Die WO 2006/136208 A1 offenbart eine Kameraanordnung mit Bildsensorabdichtung gegen Umwelteinflüsse. Davon ausgehend ist es Aufgabe der Erfindung eine Kamera bereitzustellen, die gegen Dampf, insbesondere Wasserdampf, abgedichtet ist und bei der eine kostengünstige und einfache Herstellung mit wenigen Prozessschritten gewährleistet ist.

Diese Aufgabe wird mit einer Kamera mit den Merkmalen des Anspruchs 1 gelöst. Bevorzugte Ausführungsformen sind in den abhängigen Ansprüchen angegeben.

Der Erfindung liegt der Gedanke zugrunde, die Halterung bzw. das Verbindungselement an sich so zu gestalten, dass Dampfdichtheit in der Umgebung des optischen Elements, insbesondere in der Umgebung des optischen Pfads, gewährleistet ist, ohne dass notwendigerweise ein zusätzliches, die Halterung umgebendes Gehäuse vorgesehen sein muss. Dazu wird eine Kamera zur Verwendung an Fahrzeugen, insbesondere Nutzfahrzeugen, vorgesehen, die ein Gehäuse mit einem ersten Aufnahmebereich und einem zweiten Aufnahmebereich hat. Zumindest ein optisches Element ist im ersten Aufnahmebereich angeordnet und weist zumindest eine auf einer Platine angebrachte digitale Bilderfassungseinheit auf. Dabei ist die Platine im zweiten Aufnahmebereich angeordnet. Das Gehäuse ist aus zumindest einem ersten Teil, der aus einem Kunststoff besteht, und zumindest einem zweiten Teil, der dampfdicht ist, geformt. Somit bietet das Gehäuse einerseits eine gute Umformbarkeit durch seine Herstellung aus Kunststoff, als auch eine gute Dichtheit gegen Dampf, insbesondere Wasserdampf, durch Einbringen des dampfdichten Teils in das Gehäuse bzw. Vorsehen des dampfdichten Teils am Gehäuse. Deshalb können zusätzliche Fertigungs- und Montageschritte entfallen und die Fertigungsschritte und Fertigungskosten können insgesamt reduziert werden.

Der erste Teil umgibt den zweiten Teil in radialer Richtung. Dabei ist der erste Teil mit dem zweiten Teil unlösbar miteinander verbunden. Deshalb umgibt der erste Teil den zweiten Teil bzgl. der optischen Achse zumindest in radialer Richtung vollständig, so dass der zweite Teil im ersten Teil eingebettet ist. Beispielsweise ist der zweite Teil vom ersten Teil zumindest in radialer Richtung vollständig umspritzt, z. B. mittels eines Kunststoffspritzverfahrens. Um den ersten Teil mit dem zweiten Teil ferner unlösbar zu verbinden, ist es bevorzugt, dass der erste und der zweite Teil beispielsweise formschlüssig miteinander verbunden sind.

Erfindungsgemäß ist es vorteilhaft, wenn der dampfdichte Teil dort vorgesehen ist, wo sich, in Längsrichtung des Gehäuses betrachtet, das optische Element nicht befindet, um ein Eindringen von Dampf, insbesondere Wasserdampf, in den optischen Pfad zu verhindern. Der optische Pfad ist im Gehäuse derjenige Bereich, der sich zwischen dem optischen Element und der digitalen Bilderfassungseinheit befindet. Bevorzugt ist jedoch der dampfdichte Teil auch zumindest teilweise dort vorgesehen, wo sich das optische Element befindet, um die Dampfdichtheit zu erhöhen und das Risiko des Dampfeindringens zu verringern.
Der erste und der zweite Aufnahmebereich sind jeweils Ausnehmungen im Gehäuse, in denen das optische Element bzw. die Platinengruppe angeordnet sind. Der erste Aufnahmebereich ist vorzugsweise eine zylindrische Ausnehmung im Gehäuse und erstreckt sich von der Gehäusevorderseite in das Gehäuseinnere. Die Gehäusevorderseite ist diejenige Seite des Gehäuses, auf der sich das von der Kamera zu erfassende Objekt befindet. Der zweite Aufnahmebereich ist ebenfalls bevorzugt eine zylindrische Ausnehmung und erstreckt sich von der Gehäuserückseite, die der Gehäusevorderseite gegenüberliegt, ins Gehäuseinnere. In einer Ausgestaltung weist der erste Aufnahmebereich einen kleineren Durchmesser als der zweite Aufnahmebereich auf. Alternativ können der erste und zweite Aufnahmebereich gleiche Durchmesser aufweisen.

Vorzugsweise ist der zumindest eine zweite Teil in dem zumindest einem ersten Teil zumindest teilweise eingebettet, integriert oder an diesem unlösbar angebracht. In einer bevorzugten Ausgestaltung besteht der zumindest eine zweite Teil aus Metall, beispielsweise aus Aluminium, Kupfer, Zink, Magnesium und/oder Messing. Der Fertigungsprozess des Gehäuses erfolgt beispielsweise mit einem Metall-Insertverfahren, bei dem bevorzugt metallische Bauteile in eine Spritzgießform eingelegt und mit Kunststoff zumindest teilweise umspritzt werden. Der zweite Teil ist vorzugsweise ein mit einem Druckgussverfahren hergestelltes Druckgussteil oder ein mit einem Stranggussverfahren hergestelltes Stranggussteil.

Mit dem Metall-Insertverfahren werden die guten Eigenschaften beider Werkstoffe gezielt vorteilhaft eingesetzt. Im Rahmen der vorliegenden Offenbarung wird die Dampfdichtheit des zweiten Teils und die einfache Formbarkeit des aus Kunststoff bestehenden ersten Teils als bevorzugte Eigenschaften genutzt. Aus diesem Grund weist der dampfdichte Teil gegenüber dem Kunststoffteil eine einfachere Geometrie auf, so dass der Kunststoffteil aufgrund seiner leichten Formbarkeit die komplexere Geometrie aufweist. Beispielsweise ist der dampfdichte zweite Teil zylindrisch ausgestaltet, während der leicht formbare erste Teil die gesamte Innen- und Außenformgebung übernimmt.

In einer anderen Ausgestaltung kann das Gehäuse mit einer 2-Komponenten-Technik hergestellt werden, bei der zwei unterschiedliche Materialien zu einem Bauteil zusammengefügt werden. Eine mögliche Variante sind Hart-Weich-Verbindungen, die in nur einem Spritzvorgang produziert werden können.

In einer weiteren vorteilhaften Ausgestaltung ist das zumindest eine optische Element in den ersten Aufnahmebereich über ein Gewinde eingeschraubt. Bevorzugt wird der erste Aufnah-Aufnahmebereich vom Kunststoffteil gebildet, so dass das Gewinde bereits im Spritzgießprozess ohne nachfolgenden Werkzeugeinsatz geformt werden kann bzw. durch Einschrauben geformt wird, indem der entsprechende Innenzylinder vorher hergestellt wird und nur grobe Führungen zum Einbringen des Gewindes durch Einschrauben des Gegenstücks vorhanden sind. In dieser Ausgestaltung ist der dampfdichte zweite Teil in dem Kunststoffteil integriert, eingebettet oder an diesem angebracht. In einer alternativen Ausgestaltung wird der erste Aufnahmebereich vom zweiten Teil gebildet, wobei der erste Aufnahmebereich wiederum ein Gewinde aufweist, in das das zumindest eine optische Element eingeschraubt und somit relativ zur digitalen Bilderfassungseinheit ausgerichtet und fokussiert werden kann.

In einer weiteren Ausgestaltung weist das Gehäuse ferner einen Verbindungsbereich auf, der zum Anbringen des Gehäuses an einem Fahrzeug, insbesondere Nutzfahrzeug, angepasst ist. Der Verbindungsbereich, beispielsweise ein Befestigungsflansch, kann außerdem dazu angepasst sein, das Gehäuse an einem weiteren Gehäuse anzubringen, beispielsweise in einem zusätzlichen Metallgehäuse der Kamera. Vorzugweise wird der Verbindungsbereich von dem zumindest einen leicht umformbaren ersten Teil gebildet, so dass der Verbindungsbereich mit dem ersten Teil integral verbunden ist.

Die Platine kann in allen Ausgestaltungen im zweiten Aufnahmebereich eingeklebt, eingeschraubt oder in sonstiger Weise angeordnet sein, so dass die Platine relativ im Gehäuse fixiert ist.

Nachfolgend wird die Erfindung beispielhaft anhand der beigefügten Figuren beschrieben, in denen:
- Fig. 1: eine Schnittansicht einer ersten Ausführungsform einer erfindungsgemäßen Kamera darstellt,
- Fig. 2: eine Schnittansicht einer weiteren Ausführungsform einer erfindungsgemäßen Kamera darstellt,
- Fig. 3: eine Schnittansicht einer weiteren Ausführungsform einer erfindungsgemäßen Kamera darstellt (die nicht Teil der beanspruchten Erfindung ist),
- Fig. 4: eine Schnittansicht einer weiteren Ausführungsform einer erfindungsgemäßen Kamera darstellt, und
- Fig. 5: eine Schnittansicht einer weiteren Ausführungsform einer erfindungsgemäßen Kamera darstellt.

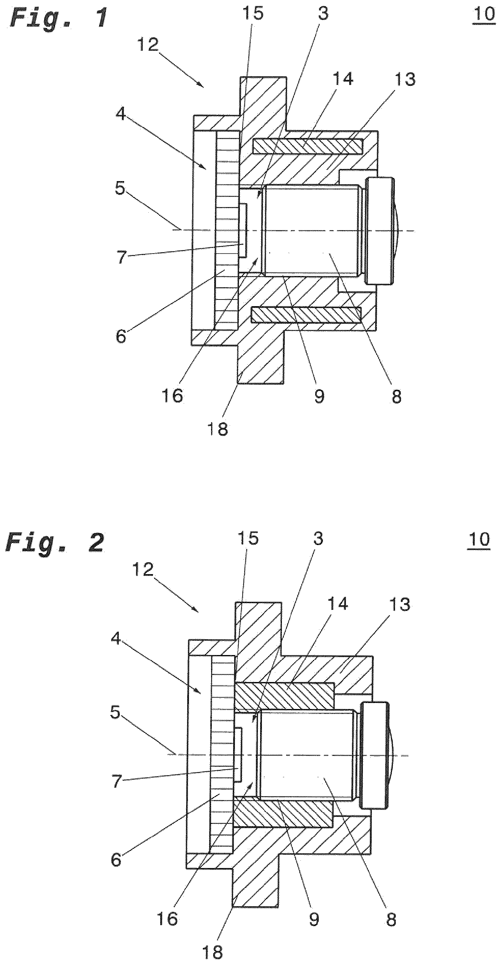

Fig. 1 stellt eine erste Ausführungsform einer erfindungsgemäßen Kamera 10 dar. Die Kamera 10 weist ein Gehäuse 12 auf, das im Inneren einen ersten Aufnahmebereich 3 und einen zweiten Aufnahmebereich 4 hat. Der erste Aufnahmebereich 3 erstreckt sich von der Gehäusevorderseite ins Gehäuseinnere. Die Gehäusevorderseite ist diejenige Seite des Gehäuses, auf der sich das von der Kamera 10 zu erfassende Objekt befindet. Der zweite Aufnahmebereich 4 erstreckt sich von der Gehäuserückseite ins Gehäuseinnere. Die Gehäuserückseite ist bzgl. der optischen Achse 5 gegenüber der Gehäusevorderseite angeordnet. Der erste Aufnahmebereich 3 weist einen ersten Durchmesser D1 auf, der kleiner als der zweite Durchmesser D2 des zweiten Aufnahmebereichs 4 ist.

Im zweiten Aufnahmebereich 4 befindet sich eine Platine 6, auf der zumindest eine digitale Bilderfassungseinheit 7 in Form eines Bildsensors angebracht ist, beispielsweise ein CCD- oder CMOS-Sensor, der lichtempfindliche elektronische Bauelemente enthält, die auf dem inneren Photoeffekt beruhen. Die Platine 6 ist an einem Flansch 15 angebracht, der sich am Übergang zwischen dem ersten und zweiten Aufnahmebereich 3, 4 befindet. Auf der Platine 6 befinden sich weitere elektronische Bauteile, die zur Steuerung und Durchführung der für die Kamera erforderlichen Funktionalitäten dienen, jedoch der Einfachheit halber in den Zeichnungen nicht dargestellt sind.

Im ersten Aufnahmebereich 3 ist ein optisches Element 8, beispielsweise ein Objektiv mit Linsensystem, angeordnet, das über ein Gewinde 9 in den ersten Aufnahmebereich 3 eingeschraubt ist. Das optische Element 8 ist im Wesentlichen koaxial zum ersten und zweiten Aufnahmebereich 3, 4. Das optische Element 8 definiert eine optische Achse 5, die bevorzugt durch das Zentrum der digitalen Bilderfassungseinheit 7 verläuft. Bei der Montage des optischen Elements 8 muss das optische Element 8 relativ zur digitalen Bilderfassungseinheit 7 derart angeordnet werden, dass der Abstand zwischen dem optischen Element 8 und der digitalen Bilderfassungseinheit 7, der die Fokussierung festlegt, und die Ausrichtung der optischen Achse 5 relativ zur digitalen Bilderfassungseinheit 7 wie gewünscht vorliegen.

In einer Ausgestaltung ist die Platine 6 über einen Kleber am Flansch 15 befestigt. Beispielsweise ist der Kleber ein einkomponentiger Epoxidharzklebstoff aus wärmehärtenden, lösungsmittelfreien Reaktionsharzmassen oder ein mit Füllstoffen gefüllter Kleber, dem feste Bestandteile, wie Quarzmehl, Kreide, Metallpulver, Ruß, etc., zugesetzt werden.

Das Gehäuse 12 besteht, wie in der Fig. 1 gezeigt, aus einem ersten Teil 13 und einem zweiten Teil 14, der vollständig von dem ersten Teil 13 umgeben ist. Somit ist der zweite Teil 14 vollständig im ersten Teil 13 eingebettet. Der erste Teil 13 besteht vorzugsweise aus Kunststoff und der zweite Teil 14 besteht vorzugsweise aus Metall, beispielweise aus Aluminium. Der zweite Teil 14 ist dampfdicht, so dass der optische Pfad 16, der den Bereich im Gehäuse 12 zwischen der digitalen Bilderfassungseinheit 7 und dem optischen Element 8 beschreibt, gegenüber dem Äußeren dampfdichtend abgedichtet ist. Der optische Pfad 16 ist, wie in den Figuren gezeigt, ein vom Gehäuse nicht ausgefüllter, freier Bereich. Zumeist ist es nämlich das Kunststoffteil 13, das nicht dampfdicht ist, weshalb das zweite, dampfdichte Teil 14 vorgesehen wird.

Damit die Dichtheit des optischen Pfads 16 gewährleistet ist, ist sowohl die Platine 6 als auch das optische Element 8 im Gehäuse 12 gedichtet angeordnet, so dass durch die Verbindungsflächen zwischen dem optischen Element 8 und dem ersten Aufnahmebereich 3 bzw. zwischen der Platine 6 und dem zweiten Aufnahmebereich 4 keine Fremdkörper und Fremdstoffe eindringen können. In der Fig. 1 ist außerdem zu sehen, dass der zweite, dampfdichte Teil 14 dort vorgesehen ist, wo der radial kürzeste Weg aus der Umgebung in den optischen Pfad 16 verläuft. Deshalb kann sich neben dem linken Ende des zweiten Teils 14 ein Bereich des ersten Teils 13 befinden, da an dieser Stelle die durch einen Verbindungsbereich 18 vorhandene radiale Dicke des ersten Teils 13 eine ausreichende Dampfdichtheit bereitstellt. Ähnliches gilt für den Bereich rechts neben dem zweiten Teil 14, da sich an dieser Stelle das dampfdicht im ersten Aufnahmebereich 3 angeordnete optische Element 8 befindet, welches nicht zwangsweise abzudichten ist.

Das Gehäuse 12 der ersten Ausführungsform kann beispielsweise durch ein Metall-Insertverfahren gebildet sein, bei dem der Metallteil 14 in eine Spritzgießform eingelegt wird und daraufhin Kunststoff eingespritzt wird, so dass der erste Teil 13 gebildet wird. Vorzugs-Vorzugsweise wird bereits während dem Metall-Insertverfahren das Gewinde 9 im ersten Teil 13 gefertigt, so dass kein anschließender Gewindeherstellungsprozess notwendig ist.

Durch die gute Formbarkeit des ersten Teils 13 aus Kunststoff und die Dampfdichtheit des zweiten Teils 14 kann das Gehäuse 12 über den Verbindungsbereich 18 direkt an einem Fahrzeug, insbesondere Nutzfahrzeug, angebracht werden, wobei kein zusätzliches dichtes Gehäuse notwendig ist. Der Verbindungsbereich 18 ist integral mit dem ersten Teil 13 verbunden.

Mit Verweis auf die Fig. 2 ist eine weitere Ausführungsform einer erfindungsgemäßen Kamera 10 gezeigt. In der Fig. 2 sind die aus der Fig. 1 bekannten Elemente mit gleichen Bezugszeichen gekennzeichnet. Die Kamera 10 der Fig. 2 unterscheidet sich von der Kamera 10 der Fig. 1 darin, dass der zweite Teil 14 innerhalb des ersten Teils 13 angeordnet ist. Somit ist der zweite Teil 14 in radial auswärtiger Richtung vom ersten Teil 13 umgeben. Der zweite Teil 14 weist bereits vor dem Spritzgießprozess ein Gewinde 9 auf, in das das optische Element 8 eingeschraubt werden kann. Der zweite Teil 14 wird in eine Spritzgießform eingelegt und daraufhin wird Kunststoff eingespritzt, so dass der erste Teil 13 gebildet wird und mit dem zweiten Teil 14 verbunden ist.

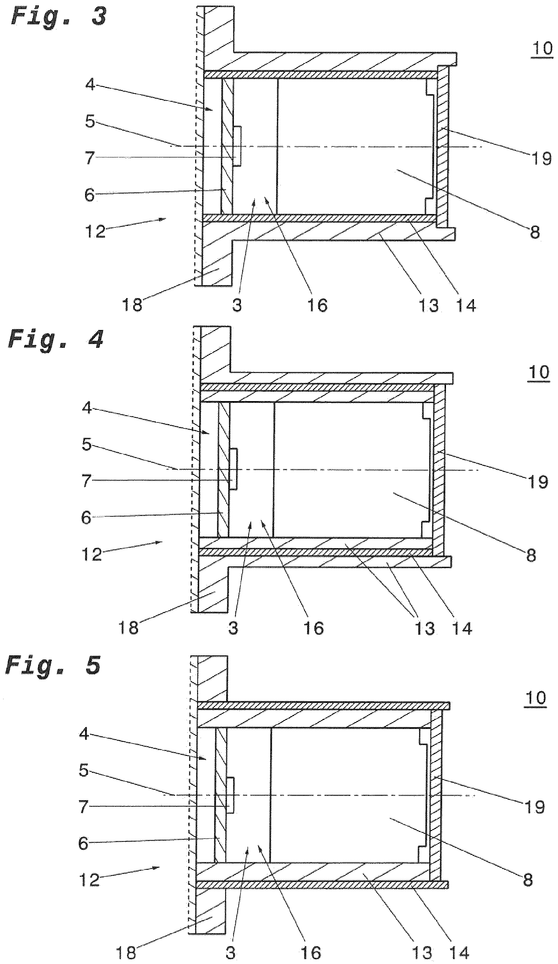

Die Fig. 3 zeigt eine weitere Ausführungsform einer erfindungsgemäßen Kamera 10 (die nicht Teil der beanspruchten Erfindung ist). In der Fig. 3 sind die aus den Fig. 1 und 2 bekannten Elemente mit gleichen Bezugszeichen gekennzeichnet. Die Kamera 10 der Fig. 3 unterscheidet sich von den Kameras 10 der Fig. 1 und 2 darin, dass das Gehäuse 12 nur einen Aufnahmebereich 3 aufweist, in dem sowohl die Platine 6 als auch das optische Element 8 angeordnet sind. Deshalb ist in dem Gehäuse 12 der Flansch 15 nicht vorhanden. Der Aufnahmebereich 3 ist ebenfalls zylindrisch ausgebildet und erstreckt sich konzentrisch zur optischen Achse 5 von der Gehäusevorderseite zur Gehäuserückseite. Das optische Element 8 ist beispielsweise in den Aufnahmebereich 3 eingeklebt, kann aber in einer anderen Ausgestaltung, wie in den Fig. 1 und 2 gezeigt, auch eingeschraubt sein. Das Gehäuse 12 ist mit einem Deckglas 19 luft- und/oder wasserdicht objektseitig verschlossen.

Der zweite Teil 14, der den zylindrischen Aufnahmebereich 3 bildet, erstreckt sich entlang der gesamten Länge des Gehäuses 12 und wird in radial auswärtiger Richtung vollständig vom ersten Teil 13 umgeben. Durch diese Erstreckung des zweiten Teils 14 über die gesamte Länge des Gehäuses 12 in Verbindung mit dem dampfdichten Einbauen der Platine 6 und des optischen Elements 8 im Aufnahmebereich 3 ist der optische Pfad 16 dampfdicht von der Umgebung abgeschirmt und vor ungewolltem Dampfeintritt geschützt.

Die Fig. 4 zeigt eine weitere Ausführungsform einer erfindungsgemäßen Kamera 10. In der Fig. 4 sind die aus den Fig. 1 bis 3 bekannten Elemente mit gleichen Bezugszeichen gekennzeichnet. Die Kamera 10 der Fig. 4 unterscheidet sich von der Kamera 10 der Fig. 3 darin, dass der zweite Teil 14 in radialer Richtung vollständig vom ersten Teil 13 umgeben ist. In dieser Ausgestaltung ist das optische Element 8 an dem ersten Teil 13 im Aufnahmebereich 3 angebracht, beispielsweise eingepresst oder eingeschraubt.

Die Fig. 5 zeigt eine weitere Ausführungsform einer erfindungsgemäßen Kamera 10. In der Fig. 5 sind die aus den Fig. 1 bis 4 bekannten Elemente mit gleichen Bezugszeichen gekennzeichnet. Die Kamera 10 der Fig. 5 unterscheidet sich von der Kamera 10 der Fig. 3 darin, dass sich der erste Teil 13 in radialer Richtung innerhalb des zweiten Teils 14 befindet. Somit bildet der zweite Teil 14, der aus Aluminium besteht, eine dampfdichte Hülle und hält jegliche Fremdstoffe, insbesondere Dampf, vom optischen Pfad 16 fern.

Unter Verweis auf die Fig. 1 bis 5 ist zu erwähnen, dass jede gezeigte Ausführungsform mit oder ohne Deckglas 19 versehen sein kann. Außerdem kann das optische Element innerhalb des Aufnahmebereichs eingeschraubt, eingepresst oder in sonstiger Weise innerhalb des Gehäuses angeordnet sein, so dass das optische Element relativ zur digitalen Bilderfassungseinheit ausgerichtet und fokussiert ist. Ebenso ist es durch die frei Formgestaltung des ersten Teils möglich, unterschiedlichste Geometrien herzustellen, die mit einem eingebauten zweiten Teil dampfdicht sind. Ebenfalls kann durch das integrale Formen verschiedener Bereiche, beispielsweise integrales Formen des Verbindungsbereichs mit dem ersten Teil, die Anzahl der Bauteile reduziert werden, was insgesamt zu einer Reduktion der Fertigungs- und Montageschritte sowie der Fertigungszeit führt.

### Bezugszeichenliste

- 3: erster Aufnahmebereich
- 4: zweiter Aufnahmebereich
- 5: optische Achse
- 6: Platine
- 7: digitale Bilderfassungseinheit
- 8: optisches Element
- 9: Gewinde
- 10: Kamera
- 12: Gehäuse
- 13: erstes Teil
- 14: zweites Teil
- 16: optischer Pfad
- 18: Verbindungsbereich
- 19: Deckglas

## Patentansprüche

1. Kamera (10) zur Verwendung an Fahrzeugen, insbesondere Nutzfahrzeugen, mit:
einem Gehäuse (12) mit einem ersten Aufnahmebereich (3) und einem zweiten Aufnahmebereich (4),
einem im ersten Aufnahmebereich (3) angeordneten optischen Element (8), und
einer auf einer Platine (6) angebrachten digitalen Bilderfassungseinheit (7), wobei die Platine (6) im zweiten Aufnahmebereich (4) angeordnet ist,
wobei das Gehäuse (12) aus einem ersten Teil (13), der aus einem Kunststoff besteht, und einem zweiten zylindrischen Teil (14) geformt ist, der aus einem dampfdichten Werkstoff besteht, so dass ein Eindringen von Dampf in einen optischen Pfad (16), der sich zwischen dem optischen Element (8) und der digitalen Bilderfassungseinheit (7) befindet, verhindert wird, und
wobei der zweite Teil (14) in dem ersten Teil (13) zumindest teilweise eingebettet oder in radialer Richtung außerhalb des ersten Teils (13) an diesem unlösbar angebracht ist.

2. Kamera (10) nach einem der vorhergehenden Ansprüche, wobei der zweite Teil (14) aus Metall, insbesondere Aluminium, Zink, Magnesium, Kupfer und/oder Messing, besteht.

3. Kamera (10) nach einem der vorhergehenden Ansprüche, wobei der zweite Teil (14) ein Druckgussteil oder ein Stranggussteil ist.

4. Kamera (10) nach einem der vorhergehenden Ansprüche, wobei das optische Element (8) in den ersten Aufnahmebereich (3) über ein Gewinde (9) eingeschraubt ist.

5. Kamera (10) nach einem der vorhergehenden Ansprüche, wobei der erste Aufnahmebereich (3) und/oder zweite Aufnahmebereich (4) von dem ersten Teil (13) gebildet sind.

6. Kamera (10) nach einem der Ansprüche 1 bis 4, wobei der erste Aufnahmebereich (3) und/oder zweite Aufnahmebereich (4) von dem zweiten Teil (14) gebildet sind.

7. Kamera (10) nach einem der vorhergehenden Ansprüche, wobei der erste Aufnahmebereich (3) zylindrisch mit einem ersten Durchmesser ausgestaltet ist und/oder der zweite Aufnahmebereich (4) zylindrisch mit einem zweiten Durchmesser ausgestaltet ist, wobei der erste Durchmesser kleiner als der zweite Durchmesser ist.

8. Kamera (10) nach Anspruch 7, ferner mit einem Flansch (15), der sich zwischen dem ersten Aufnahmebereich (3) und dem zweiten Aufnahmebereich (4) befindet, wobei die Platine (6) an dem Flansch (15) befestigt ist.

9. Kamera (10) nach einem der vorhergehenden Ansprüche, wobei
der zweite Teil (14) relativ zum ersten Teil (13) radial innen angeordnet ist, oder
der zweite Teil (14) relativ zum ersten Teil (13) radial außen angeordnet ist.

10. Kamera (10) nach einem der vorhergehenden Ansprüche, wobei der erste Teil (13) durch ein Spritzgießverfahren mit dem zweiten Teil (14) verbunden ist.

11. Kamera (10) nach einem der vorhergehenden Ansprüche, wobei das Gehäuse (12) ferner einen Verbindungsbereich (18) aufweist, der zum Anbringen des Gehäuses (12) an einem Fahrzeug, insbesondere Nutzfahrzeug, angepasst ist.

12. Kamera (10) nach Anspruch 11, wobei der Verbindungsbereich (18) einteilig mit dem ersten Teil (13) gebildet ist.

13. Kamera (10) nach einem der vorhergehenden Ansprüche, wobei das optische Element (8) im ersten Aufnahmebereich (3) und/oder die Platine (6) im zweiten Aufnahmebereich (4) dampfdicht eingesetzt sind.

## Claims

1. A camera (10) for use on vehicles, in particular commercial vehicles, comprising:
a housing (12) including a first accommodation portion (3) and a second accommodation portion (4);
an optical element (8) disposed within the first accommodation portion (3); and
a digital image capturing unit (7) provided on a circuit board (6), wherein the circuit board (6) is disposed within the second accommodation portion (4),
wherein the housing (12) is formed from a first part (13) consisting of plastic and a second cylindrical part (14) consisting of a vapour resistant material, such that penetration of vapour into an optical path (16) disposed between the optical element (8) and the digital image capturing unit (16) is prevented, and
wherein the second part (14) is at least partially embedded within the first part (13) or is indivisibly attached to the first part (13) outside the first part (13) in a radial direction.

2. The camera (10) according to any one of the preceding claims, wherein the second part (14) is made of metal, in particular aluminium, zinc, magnesium, copper, and/or brass.

3. The camera (10) according to any one of the preceding claims, wherein the second part (14) is either a die-cast part or a continuous casting part.

4. The camera (10) according to any one of the preceding claims, wherein the optical element (8) is screwed into the first accommodation portion (3) via a thread (9).

5. The camera (10) according to any one of the preceding claims, wherein the first accommodation portion (3) and/or the second accommodation portion (4) is formed by the first part (13).

6. The camera (10) according to any one of claims 1 to 4, wherein the first accommodation portion (3) and/or the second accommodation portion (4) is formed by the second part (14).

7. The camera (10) according to any one of the preceding claims, wherein the first accommodation portion (3) is cylindrically formed with a first diameter and/or the second accommodation portion (4) is cylindrically formed with a second diameter, the first diameter being smaller than the second diameter.

8. The camera (10) according to claim 7, further comprising a flange (15) disposed between the first accommodation portion (3) and the second accommodation portion (4), wherein the circuit board (6) is attached to the flange (15).

9. The camera (10) according to any one of the preceding claims, wherein
the second part (14) is radially inwardly disposed with respect to the first part (13), or
the second part (14) is radially outwardly disposed with respect to the first part (13).

10. The camera (10) according to any one of the preceding claims, wherein the first part (13) is connected to the second part (14) by an injection moulding process.

11. The camera (10) according to any one of the preceding claims, wherein the housing (12) further includes a connection portion (18) configured to mount the housing (12) on a vehicle, in particular a commercial vehicle.

12. The camera (10) according to claim 11, wherein the connection portion (18) is integrally formed with the first part (13).

13. The camera (10) according to any one of the preceding claims, wherein the optical element (8) is disposed within the first accommodation portion (3) in a vapour resistant manner and/or the circuit board (6) is disposed within the second accommodation portion (4) in a vapour resistant manner.

## Revendications

1. Caméra (10) à utiliser sur des véhicules, en particulier des véhicules utilitaires, avec :
un boîtier (12) avec une première zone de réception (3) et une deuxième zone de réception (4),
un élément optique (8) agencé dans la première zone de réception (3), et
une unité d'acquisition d'image numérique (7) montée sur une carte de circuit imprimé (6), dans laquelle la carte de circuit imprimé (6) est agencée dans la deuxième zone de réception (4),
dans laquelle le boîtier (12) est formé d'une première partie (13), qui se compose d'un plastique, et d'une deuxième partie cylindrique (14), qui se compose d'un matériau étanche à la vapeur, de sorte qu'une pénétration de vapeur dans un trajet optique (16), qui se trouve entre l'élément optique (8) et l'unité d'acquisition d'image numérique (7), est empêchée, et
dans laquelle la deuxième partie (14) est incorporée au moins en partie dans la première partie (13) ou est montée de manière inamovible à celle-ci dans la direction radiale à l'extérieur de la première partie (13).

2. Caméra (10) selon l'une quelconque des revendications précédentes, dans laquelle la deuxième partie (14) se compose de métal, en particulier aluminium, zinc, magnésium, cuivre et/ou laiton.

3. Caméra (10) selon l'une quelconque des revendications précédentes, dans laquelle la deuxième partie (14) est une pièce coulée sous pression ou une pièce en coulée continue.

4. Caméra (10) selon l'une quelconque des revendications précédentes, dans laquelle l'élément optique (8) est vissé dans la première zone de réception (3) par le biais d'un filetage (9).

5. Caméra (10) selon l'une quelconque des revendications précédentes, dans laquelle la première zone de réception (3) et/ou la deuxième zone de réception (4) sont formées de la première partie (13).

6. Caméra (10) selon l'une quelconque des revendications 1 à 4, dans laquelle la première zone de réception (3) et/ou la deuxième zone de réception (4) sont formées de la deuxième partie (14).

7. Caméra (10) selon l'une quelconque des revendications précédentes, dans laquelle la première zone de réception (3) est configurée de manière cylindrique avec un premier diamètre et/ou la deuxième zone de réception (4) est configurée de manière cylindrique avec un deuxième diamètre, dans laquelle le premier diamètre est inférieur au deuxième diamètre.

8. Caméra (10) selon la revendication 7, en outre avec une bride (15), qui se trouve entre la première zone de réception (3) et la deuxième zone de réception (4), dans laquelle la carte de circuit imprimé (6) est fixée sur la bride (15).

9. Caméra (10) selon l'une quelconque des revendications précédentes, dans laquelle
la deuxième partie (14) est agencée radialement à l'intérieur par rapport à la première partie (13), ou
la deuxième partie (14) est agencée radialement à l'extérieur par rapport à la première partie (13).

10. Caméra (10) selon l'une quelconque des revendications précédentes, dans laquelle la première partie (13) est reliée à la deuxième partie (14) par un procédé de moulage par injection.

11. Caméra (10) selon l'une quelconque des revendications précédentes, dans laquelle le boîtier (12) présente en outre une zone de liaison (18), qui est adaptée à l'application du boîtier (12) sur un véhicule, en particulier véhicule utilitaire.

12. Caméra (10) selon la revendication 11, dans laquelle la zone de liaison (18) est formée d'un seul tenant avec la première partie (13).

13. Caméra (10) selon l'une quelconque des revendications précédentes, dans laquelle l'élément optique (8) est inséré étanche à la vapeur dans la première zone de réception (3) et/ou la carte de circuit imprimé (6) est insérée étanche à la vapeur dans la deuxième zone de réception (4).
